# EUROPÄISCHE PATENTSCHRIFT

(11) **EP 3 724 015 B1**
(45) Veröffentlichungstag und Bekanntmachung des Hinweises auf die Patenterteilung: **28.07.2021**
(21) Anmeldenummer: 18826521.9
(22) Anmeldetag: 10.12.2018
(51) Int. Cl.: B60K 1/00, F16H 57/08, F16H 57/033, F16H 3/66

(54) **ELEKTRISCHE ANTRIEBSVORRICHTUNG FÜR EIN KRAFTFAHRZEUG**
ELECTRIC DRIVE DEVICE FOR A MOTOR VEHICLE
DISPOSITIF D'ENTRAÎNEMENT ÉLECTRIQUE POUR UN VÉHICULE AUTOMOBILE

(30) Priorität: 11.12.2017 DE 102017011401
(43) Veröffentlichungstag der Anmeldung: 21.10.2020
(73) Patentinhaber: Daimler AG, 70372 Stuttgart (DE)
(72) Erfinder: SCHILDER, Tobias, 70794 Filderstadt (DE); RIEDL, Klaus, 72074 Tübingen (DE); HAERTER, Tobias, 70174 Stuttgart (DE)
(74) Vertreter: JENSEN & SON
(86) Internationale Anmeldenummer: PCT/EP2018/084161
(87) Internationale Veröffentlichungsnummer: WO 2019/115453

(56) Entgegenhaltungen:
- WO-A1-2011/082707
- WO-A1-2012/022640
- WO-A1-2016/055322
- DE-A1-102010 050 709
- DE-A1-102013 226 479
- Thomas Belz: "Varianten von Mehrgang-Planetengetrieben", , 8. März 2016 (2016-03-08), XP055257458, Gefunden im Internet: URL:https://register.epo.org/application?d ocumentId=EYPWMGE67270DSU&appnumber=EP1375 6488&showPdfPage=all [gefunden am 2016-03-11]

## Beschreibung

Die Erfindung betrifft eine elektrische Antriebsvorrichtung für ein Kraftfahrzeug gemäß dem Oberbegriff von Patentanspruch 1.

Eine Getriebevorrichtung für ein Kraftfahrzeug, insbesondere für einen Kraftwagen, ist beispielsweise bereits der DE 10 2015 209 647 A1 als bekannt zu entnehmen. Die Getriebevorrichtung umfasst ein Gehäuse und einen in dem Gehäuse aufgenommenen ersten Planetenradsatz, welcher einfach auch als erster Planetensatz bezeichnet wird. Der erste Planetenradsatz umfasst ein erstes Sonnenrad, ein erstes Hohlrad und einen ersten Planetenträger, wobei das erste Sonnenrad, das erste Hohlrad und der erste Planetenträger auch als erste Bauelemente bezeichnet werden beziehungsweise erste Bauelemente des ersten Planetenradsatzes sind.

Die Getriebevorrichtung umfasst ferner einen in dem Gehäuse aufgenommenen zweiten Planetenradsatz, welcher auch einfach als zweiter Planetensatz bezeichnet wird und ein drehfest mit dem Gehäuse verbundenes oder verbindbares zweites Sonnenrad, ein drehfest mit dem ersten Planetenträger verbundenes oder verbindbares zweites Hohlrad und einen zweiten Planetenträger aufweist. Das zweite Sonnenrad, der zweite Planetenträger und das zweite Hohlrad werden auch als zweite Bauelemente bezeichnet beziehungsweise sind zweite Bauelemente des zweiten Planetenradsatzes. Außerdem ist eine permanent drehfest mit dem zweiten Planetenträger verbundene Abtriebswelle vorgesehen, über welche von der Getriebevorrichtung Drehmomente zum Antreiben des Kraftfahrzeugs bereitstellbar sind.

Ferner sind aus der DE 10 2014 218 610 A1, der DE 10 2015 104 778 A1, der DE 102013 226 479 A1, der WO 2016/055322 A1, der WO 2011/082707 A1, der DE 10 2010 050 709 A1 und der WO 2012/022 640 A1 elektrische Antriebsvorrichtungen für Kraftfahrzeuge bekannt.

Aus der gattungsgemäßen DE 10 2013 226 479 A1 ist eine elektrische Antriebsvorrichtung für ein Kraftfahrzeug bekannt, bei welcher über die oben genannten Merkmale hinaus ein erster und ein zweier Planetenradsatz derart miteinander gekoppelt sind, dass ein erstes Sonnenrad mit einem zweiten Sonnenrad drehfest verbunden oder verbindbar ist, und bei welcher ein zweites Hohlrad drehfest mit einem ersten Planetenträger verbunden oder verbindbar ist.

Aufgabe der vorliegenden Erfindung ist es, eine elektrische Antriebsvorrichtung der eingangs genannten Art derart weiterzuentwickeln, dass sich eine besonders verlustarme und kompakte Bauweise einer elektrischen Antriebsvorrichtung und dabei eine besonders vorteilhafte Funktionalität der elektrischen Antriebsvorrichtung realisieren lassen.

Diese Aufgabe wird durch eine elektrische Antriebsvorrichtung mit den Merkmalen des Patentanspruchs 1 gelöst. Vorteilhafte Ausgestaltungen mit zweckmäßigen Weiterbildungen der Erfindung sind in den übrigen Ansprüchen angegeben.

Um eine aus dem Stand der Technik bekannte elektrische Antriebsvorrichtung derart weiterzuentwickeln, dass die elektrische Antriebsvorrichtung mit besonders verlustarmer und kompakter Bauweise und gleichzeitig mit besonders vorteilhafter Funktionalität realisiert werden kann, wird zunächst davon ausgegangen, dass die elektrische Antriebsvorrichtung ein Gehäuse, eine elektrische Maschine, ein Differentialgetriebe und eine Getriebevorrichtung aufweist. Wobei die Getriebevorrichtung einen in dem Gehäuse aufgenommenen ersten Planetenradsatz, welcher ein erstes Sonnenrad, ein erstes Hohlrad und einen ersten Planetenträger als erste Bauelemente des ersten Planetenradsatzes aufweist, einen in dem Gehäuse aufgenommenen zweiten Planetenradsatz, welcher ein drehfest mit dem Gehäuse verbundenes oder verbindbares zweites Sonnenrad, ein drehfest mit dem ersten Planetenträger verbundenes oder verbindbares zweites Hohlrad und einen zweiten Planetenträger als zweite Bauelemente des zweiten Planetenradsatzes aufweist, und eine permanent drehfest mit dem zweiten Planetenträger verbundene Abtriebswelle, über welche von der Getriebevorrichtung Drehmomente zum Antreiben des Kraftfahrzeugs bereitstellbar sind, umfasst, wobei die Abtriebswelle drehfest mit einer Eingangswelle des Differentialgetriebes verbunden ist. Ferner wird davon ausgegangen, dass dem ersten Planetenradsatz ein Verblockungsschaltelement zugeordnet ist, mittels welchem eines der ersten Bauelemente mit einem anderen der ersten Bauelemente oder mit einem der zweiten Bauelemente drehfest verbindbar ist. Insbesondere ist beispielsweise das Verblockungsschaltelement zwischen wenigstens einem Verblockungszustand und wenigstens einem Offenzustand umschaltbar, wobei beispielsweise der Verblockungszustand mit wenigstens einer Verblockungsstellung und der Offenzustand mit wenigstens einer Offenstellung des Verblockungsschaltelements korrespondiert. Dabei ist das Verblockungsschaltelement beispielsweise, insbesondere relativ zu dem Gehäuse und/oder translatorisch, zwischen der Verblockungsstellung und der Offenstellung bewegbar.
Schließlich wird davon ausgegangen, dass das erste Sonnenrad mit dem zweiten Sonnenrad drehfest verbunden oder verbindbar ist. Ist beispielsweise das erste Sonnenrad mit dem zweiten Sonnenrad drehfest verbunden, so kann insbesondere vorgesehen sein, dass das erste Sonnenrad mit dem zweiten Sonnenrad permanent drehfest verbunden ist. Unter einer solchen permanent drehfesten Verbindung von Komponenten der Getriebevorrichtung und vorliegend des ersten Sonnenrads mit dem zweiten Sonnenrad ist insbesondere zu verstehen, dass die Komponenten beziehungsweise vorliegend das erste Sonnenrad und das zweite Sonnenrad stets drehfest miteinander verbunden sind, sodass kein Schaltelement vorgesehen ist, mittels welchem die drehfeste Verbindung zwischen den Komponenten bedarfsgerecht hergestellt, aufgehoben und darauf wieder hergestellt werden könnte.

Erfindungsgemäß ist vorgesehen, dass das Differentialgetriebe radial innerhalb des ersten Planetenradsatzes und des zweiten Planetenradsatzes und axial im Wesentlichen im Bereich einer axialen Erstreckung des ersten Planetenradsatzes und des zweiten Planetenradsatzes angeordnet ist und dass der zweite Planetenträger drehfest mit einem Differentialkorb des Differentialgetriebes verbunden ist.

Ferner ist erfindungsgemäß eine Übersetzungsstufe vorgesehen, welche bezüglich eines Momentenflusses zwischen der elektrischen Maschine und dem ersten Planetenradsatz angeordnet ist. Unter dem Momentenfluss ist beispielsweise ein von der elektrischen Maschine zu dem ersten Planetenradsatz oder umgekehrt verlaufender Drehmomentenfluss zu versehen, über welchen Drehmomente von der elektrischen Maschine auf den ersten Planetenradsatz oder umgekehrt übertragbar sind oder übertragen werden. Die Übersetzungsstufe ist außerdem axial, das heißt beispielsweise in axialer Richtung der elektrischen Maschine, zwischen der elektrischen Maschine und dem Differentialgetriebe angeordnet. Außerdem ist die Übersetzungsstufe axial, das heißt beispielsweise in axialer Richtung der elektrischen Maschine, zwischen der elektrischen Maschine und dem ersten Planetenradsatz angeordnet. Auf diese Weise kann, ohne die radiale Kompaktheit der gesamten elektrischen Antriebsvorrichtung zu beeinträchtigen, deren Performance erhöht werden. Die axiale Richtung der elektrischen Maschine fällt beispielsweise mit der axialen Richtung der Übersetzungsstufe zusammen beziehungsweise die axiale Richtung der elektrischen Maschine verläuft parallel zur axialen Richtung der Übersetzungsstufe.

Ferner ist erfindungsgemäß ein Verbindungskörper vorgesehen, welcher drehfest mit dem zweiten Sonnenrad verbunden ist. Des Weiteren ist der Verbindungskörper drehfest mit einer Wand des Gehäuses verbunden oder verbindbar, wobei der gesamte Verbindungskörper radial innerhalb des ersten Planetenträgers und des zweiten Planetenträgers angeordnet ist. Auch diese Weiterbildung der Erfindung führt zu einer erhöhten Kompaktheit der elektrischen Antriebsvorrichtung.

Schließlich ist erfindungsgemäß vorgesehen, dass der zweite Planetenträger mittels eines Lagerelementes axial gegenüber dem ersten Planetenträger und mittels eines weiteren Lagerelementes axial gegenüber dem zweiten Sonnenrad gelagert ist, und dass mittels eines anderen Lagerelementes der erste Planetenträger gegenüber dem ersten Sonnenrad axial gelagert ist und mittels eines zusätzlichen Lagerelementes das erste Sonnenrad axial gegenüber dem Verbindungskörper gelagert ist

Unter einer drehfesten Verbindung zweier drehbar gelagerter Elemente soll verstanden werden, dass die beiden Elemente koaxial zu einander angeordnet sind und derart miteinander verbunden sind, dass sie mit gleicher Winkelgeschwindigkeit drehen. Unter einer drehfesten Verbindung eines drehbar gelagerten Elementes mit einem Gehäuse soll verstanden werden, dass das Element derart mit dem Gehäuse verbunden ist, dass es nicht gegenüber dem Gehäuse verdreht werden kann.

Unter einer Anordnung eines Elementes radial innerhalb eines anderen Elementes soll hier verstanden werden, dass die beiden Elemente koaxial zueinander angeordnet sind und dass ein maximaler Radius des einen Elementes kleiner ist ein als ein minimaler Radius des anderen Elementes. Somit ist beispielsweise das Differentialgetriebe koaxial zu dem ersten Planetenradsatz und koaxial zu dem zweiten Planetenradsatz angeordnet, wobei der größte Radius, insbesondere der größte Außenradius, oder der größte Außenumfang oder der größte Außendurchmesser des Differentialgetriebes kleiner als der der größte Radius, insbesondere der größte Außenradius, oder der größte Außenumfang oder der größte Außendurchmesser des ersten Planetenradsatzes und des zweiten Planetenradsatzes ist.

Beispielsweise sind die genannten Bauelemente grundsätzlich um eine auch als Hauptdrehachse bezeichnete Drehachse relativ zu dem Gehäuse drehbar, insbesondere dann, wenn die Bauelemente nicht an dem Gehäuse drehfest festgelegt sind. In dem Verblockungszustand sind die mittels des Verblockungsschaltelements drehfest miteinander verbindbaren und dadurch miteinander verblockbaren Bauelemente mittels des Verblockungsschaltelements drehfest miteinander verbunden, sodass sich die mittels des Verblockungsschaltelements drehfest miteinander verbundenen und dadurch miteinander verblockten Bauelemente insbesondere dann, wenn die Getriebevorrichtung angetrieben wird, das heißt wenn Drehmomente in die Getriebevorrichtung eingeleitet werden, gemeinsam, das heißt gleichzeitig und somit als Block, insbesondere um die Drehachse, relativ zu dem Gehäuse drehen und somit als Block umlaufen. Dabei können sich die miteinander verblockten Bauelemente nicht relativ zueinander drehen. In dem Freigabezustand gibt jedoch das Verblockungsschaltelement die in dem Verblockungszustand des Verblockungsschaltelements miteinander verblockten Bauelemente für eine Drehung, insbesondere um die Drehachse, relativ zueinander frei, sodass sich beispielsweise die in dem Verblockungszustand des Verblockungsschaltelements mittels des Verblockungsschaltelements miteinander verblockten Bauelemente insbesondere dann, wenn die Getriebevorrichtung angetrieben wird, relativ zueinander, insbesondere um die Hauptdrehachse, drehen beziehungsweise drehen können. Hierdurch kann auf verlustarme und besonders kompakte Weise eine besonders vorteilhafte Schaltbarkeit und somit eine besonders vorteilhafte Funktionalität der Getriebevorrichtung realisiert werden.

Insbesondere ist es beispielsweise möglich, die Getriebevorrichtung als schaltfähige, insbesondere als lastschaltfähige, sowie insbesondere mehrgängige und dabei beispielsweise zwei- oder dreigängige Getriebestruktur, insbesondere für elektrische Antriebe, zu gestalten, wobei sich bedarfsgerecht an die koaxiale oder aber eine achsparallele Ausgestaltung realisieren lässt. Mit anderen Worten ist mittels der erfindungsgemäßen Getriebevorrichtung die Herstellung eines Modulbaukastens auf einfache Weise möglich, sodass beispielsweise unterschiedliche Bauvarianten der Getriebevorrichtung auf einfache Weise dargestellt werden können. Bei einer ersten der Bauvarianten weist beispielsweise die Getriebevorrichtung genau zwei schaltbare Gänge auf, sodass die Getriebevorrichtung als schaltfähig, insbesondere als lastschaltfähige, Getriebestruktur mit genau zwei Gängen ausgebildet ist. Bei einer zweiten der Bauvarianten weist beispielsweise die Getriebevorrichtung genau drei schaltfähige Gänge auf, sodass die Getriebevorrichtung als schaltfähige, insbesondere als lastschaltfähige, Getriebestruktur mit genau drei Gängen ausgebildet ist. Die jeweilige erste beziehungsweise zweite Bauvariante kann dabei als koaxiale oder achsparallele Bauweise ausgebildet werden, sodass sich insgesamt mindestens vier voneinander unterschiedliche Bauvarianten auf einfache Weise darstellen lassen. Dabei kann die Verlustleistung besonders gering gehalten werden. Eine besonders vorteilhafte Schaltfähigkeit und besonders vorteilhafte Übersetzung lassen sich insbesondere durch den Einsatz von lediglich zwei oder drei Planetenradsätzen realisieren, sodass der Bauraumbedarf, die Teileanzahl, das Gewicht und die Kosten in einem besonders geringen Rahmen gehalten werden können. Insbesondere lassen sich beispielsweise wenigstens oder genau zwei Fahrgänge, insbesondere wenigstens oder genau drei Fahrgänge, darstellen, welche jeweils sowohl zur Realisierung einer Vorwärtsfahrt als auch zur Realisierung einer Rückwärtsfahrt des Kraftfahrzeugs verwendbar sind. Ein erster der Fahrgänge soll beispielsweise einen Anhängerbetrieb ermöglichen. Außerdem ist der erste Fahrgang beispielsweise für Kriechvorgänge vorgesehen, um beispielsweise eine zum Antreiben der Getriebevorrichtung beziehungsweise des Kraftfahrzeugs ausgebildete elektrische Maschine und insbesondere deren Leistungselektronik vor Überhitzung zu schützen. Bei den mittels des Verblockungsschaltelements miteinander verblockbaren Bauelementen handelt es sich vorzugsweise um zwei der ersten Bauelemente des ersten Planetenradsatzes.

Unter dem Merkmal, dass Komponenten der Getriebevorrichtung beziehungsweise das erste Sonnenrad und das zweite Sonnenrad drehfest miteinander verbindbar sind, ist insbesondere zu verstehen, dass beispielsweise ein Schaltelement vorgesehen ist, welches beispielsweise zwischen einem ersten Schaltzustand und einem zweiten Schaltzustand umschaltbar ist. Der erste Schaltzustand korrespondiert beispielsweise mit einer ersten Schaltstellung, wobei der zweite Schaltzustand beispielsweise in einer zweiten Schaltstellung korrespondiert. Dabei ist das Schaltelement beispielsweise, insbesondere relativ zu dem Gehäuse und/oder translatorisch, zwischen der ersten Schaltstellung und der zweiten Schaltstellung bewegbar. In dem ersten Schaltzustand sind die Komponenten beziehungsweise das erste Sonnenrad und das zweite Sonnenrad mittels des Schaltelements drehfest miteinander verbunden, sodass sich die Komponenten beziehungsweise die Sonnenräder nicht relativ zueinander drehen können. In dem zweiten Schaltzustand jedoch gibt das Schaltelement die Komponenten beziehungsweise die Sonnenräder für eine Drehung, insbesondere um die Drehachse, relativ zueinander frei, sodass sich die Komponenten beziehungsweise die Sonnenräder in dem zweiten Schaltzustand insbesondere dann, wenn die Getriebevorrichtung angetrieben wird, relativ zueinander, insbesondere um die Drehachse, drehen beziehungsweise drehen können. Eine permanent drehfeste Verbindung von Komponenten der Getriebevorrichtung kann somit nicht bedarfsgerecht hergestellt und wieder aufgehoben werden, sondern ist stets vorgesehen, während mittels des Schaltelements eine drehfeste Verbindung zwischen den Komponenten bedarfsgerecht hergestellt, wieder gelöst und wieder hergestellt werden kann. Durch die Ausführungsform, dass das erste Sonnenrad und das zweite Sonnenrad drehfest miteinander verbunden beziehungsweise miteinander verbindbar sind, können auf besonders kompakte und verlustarme Übersetzungen dargestellt werden.

Eine weitere Ausführungsform zeichnet sich dadurch aus, dass eine Antriebswelle vorgesehen ist, über welche Drehmomente in die Getriebevorrichtung einleitbar sind. Somit ist die Getriebevorrichtung über die Antriebswelle antreibbar. Beispielsweise kann die Getriebevorrichtung über die Antriebswelle von der zuvor genannten elektrischen Maschine angetrieben werden, sodass beispielsweise Räder des Kraftfahrzeugs und somit das Kraftfahrzeug insgesamt über die Getriebevorrichtung und somit über die Antriebswelle von der elektrischen Maschine angetrieben werden können.

Dabei hat es sich zur Realisierung einer besonders vorteilhaften Funktionalität als besonders vorteilhaft gezeigt, wenn die Übersetzungsvorrichtung als ein in dem Gehäuse aufgenommener dritter Planetenradsatz ausgebildet ist, welcher ein drittes Sonnenrad, ein drittes Hohlrad und einen dritten Planetenträger aufweist. Das dritte Sonnenrad, das dritte Hohlrad und der dritte Planetenträger sind dabei dritte Bauelemente des dritten Planetenradsatzes beziehungsweise werden auch als dritte Bauelemente bezeichnet. Der dritte Planetenradsatz wird auch einfach als dritter Planetensatz bezeichnet. Dabei ist es vorgesehen, dass das dritte Sonnenrad permanent drehfest mit der Antriebswelle verbunden ist, sodass das dritte Sonnenrad einem Antrieb beziehungsweise einer Antriebsseite der Getriebevorrichtung zugeordnet ist, welche über die Antriebsseite beziehungsweise über den Antrieb angetrieben werden kann. Das dritte Hohlrad ist permanent drehfest mit dem Gehäuse verbunden und somit permanent drehfest an dem Gehäuse festgelegt, sodass sich das dritte Hohlrad insbesondere auch dann nicht relativ zu dem Gehäuse drehen kann, wenn die Getriebevorrichtung angetrieben wird. Der dritte Planetenträger ist dabei drehfest mit dem ersten Hohlrad verbunden oder verbindbar. Dabei hat es sich als besonders vorteilhaft gezeigt, wenn der dritte Planetenträger permanent drehfest mit dem ersten Hohlrad verbunden ist. Hierdurch können die Teileanzahl und somit die Kosten und das Gewicht besonders gering gehalten werden.

Bei einer besonders vorteilhaften Ausführungsform der Erfindung ist die Übersetzungsstufe als eine Stirnradstufe ausgebildet, welche ein erstes Zahnrad und ein mit dem ersten Zahnrad kämmendes und permanent drehfest mit einer permanent drehfest mit dem ersten Hohlrad verbundenen Antriebswelle verbundenes zweites Zahnrad aufweist. Dadurch können besonders vorteilhaft Drehmomente in die Getriebevorrichtung eingeleitet werden, wobei gleichzeitig der Bauraumbedarf in einem besonders geringen Rahmen gehalten werden kann.

Um die Teileanzahl und somit den Bauraumbedarf und die Kosten und das Gewicht besonders gering zu halten und dabei eine besonders vorteilhafte Übersetzung auf verlustarme Weise realisieren zu können, ist es in weiterer Ausgestaltung der Erfindung vorgesehen, dass das zweite Hohlrad permanent drehfest mit dem ersten Planetenträger verbunden ist.

Um auf bauraumgünstige und verlustarme Weise eine besonders vorteilhafte Übersetzung der Getriebevorrichtung realisieren zu können, ist es in weiterer Ausgestaltung der Erfindung vorgesehen, dass die zwei mittels des Verblockungsschaltelements drehfest miteinander verbindbaren beziehungsweise miteinander verblockbaren Bauelemente das erste Hohlrad und das erste Sonnenrad des ersten Planetenradsatzes sind.

Alternativ hat es sich als besonders vorteilhaft gezeigt, wenn die zwei mittels des Verblockungsschaltelements drehfest miteinander verbindbaren beziehungsweise miteinander verblockbaren Bauelemente das zweite Hohlrad und der erste Planetenträger sind.

Schließlich hat es sich als besonders vorteilhaft gezeigt, wenn die Getriebevorrichtung eine Parksperre aufweist, mittels welcher die Abtriebswelle drehfest an dem Gehäuse festlegbar ist. Hierdurch können beispielsweise die Abtriebswelle und mit der Abtriebswelle gekoppelte Räder des Kraftfahrzeugs gegen unerwünschte Drehungen gesichert werden, sodass beispielsweise dann, wenn das Kraftfahrzeug auf einem Gefälle abgestellt ist, ein unerwünschtes Wegrollen des Kraftfahrzeugs vermieden werden kann. Das jeweilige Verblockungsschaltelement beziehungsweise Kopplungsschaltelement ist ein Schaltelement beziehungsweise wird auch als Schaltelement bezeichnet. Dabei kann vorgesehen sein, dass mindestens eines der Schaltelemente, mehrere der Schaltelemente oder alle Schaltelemente als formschlüssiges Schaltelement und somit beispielsweise als Klauenkupplung beziehungsweise Klauenschaltelement ausgebildet ist, wodurch Verluste besonders gering gehalten werden können. Dabei sind beispielsweise die jeweiligen Komponenten mittels des jeweiligen Schaltelements in dem jeweiligen Schaltzustand formschlüssig drehfest miteinander verbunden. Ein weiterer Vorteil der erfindungsgemäßen Getriebevorrichtung ist, dass Relativdrehzahlen in offen laufenden Schaltelementen, das heißt dann, wenn die Schaltelemente geöffnet sind, besonders gering gehalten werden können. Ferner können in den Planetenradsätzen Relativdrehzahlen in einem besonders geringen Rahmen gehalten werden. Außerdem kann eine sehr gute Zugänglichkeit zu den Schaltelementen dargestellt werden, insbesondere dann, wenn das Schaltelement beziehungsweise die Schaltelemente als Bremsen ausgebildet sind. Mit anderen Worten ist es möglich, dass mindestens eines der Schaltelemente, mehrere der Schaltelemente oder alle Schaltelemente als reibschlüssiges Schaltelement und somit beispielsweise als Lamellenkupplung beziehungsweise als Bremse ausgebildet ist, sodass beispielsweise die jeweiligen Komponenten mittels des jeweiligen Schaltelements reib- beziehungsweise kraftschlüssig drehfest miteinander verbunden sein können. Ein weiterer Vorteil ist, dass sich insbesondere durch Realisierung einer Mehrgängigkeit der Getriebevorrichtung Drehzahlen der elektrischen Maschine auch bei hohen Geschwindigkeiten besonders gering halten lassen, wodurch Verluste besonders gering gehalten werden können.

Im Rahmen der Erfindung ist beispielsweise unter dem Merkmal, dass eine erste Komponente wie beispielsweise das zweite Sonnenrad, das zweite Hohlrad, das erste Sonnenrad, der Verbindungskörper oder der dritte Planetenträger drehfest mit einer zweiten Komponente wie beispielsweise dem Gehäuse, dem ersten Planetenträger, dem zweiten Sonnenrad, der auch als Gehäusewand bezeichneten Wand des Gehäuses oder dem ersten Hohlrad verbunden ist, zu verstehen, dass die erste Komponente permanent und somit stets beziehungsweise immer drehfest mit der zweiten Komponente verbunden beziehungsweise gekoppelt ist. Somit ist nicht etwa ein verstellbares beziehungsweise umschaltbares Schaltelement vorgesehen, mittels welchem die erste Komponente reversibel mit der zweiten Komponenten drehfest verbunden werden und die drehfeste Verbindung zwischen der ersten Komponente und der zweiten Komponente reversibel aufgehoben werden könnte, sondern die erste Komponente ist stets beziehungsweise immer oder permanent drehfest mit der zweiten Komponente verbunden.

Außerdem kann beispielsweise im Rahmen der Erfindung unter dem Merkmal, dass die erste Komponente drehfest mit der zweiten Komponente verbindbar ist, verstanden werden, dass der ersten Komponente und der zweiten Komponente ein auch als Schaltelement bezeichnetes Verbindungsschaltelement zugeordnet ist. Das Verbindungsschaltelement ist beispielsweise zwischen einem Verbindungszustand und einem Lösezustand umschaltbar. Der Verbindungszustand korrespondiert beispielsweise mit wenigstens einer Verbindungsstellung des Verbindungsschaltelements, wobei der Lösezustand beispielsweise mit einer Lösestellung des Verbindungsschaltelements korrespondiert. Somit kann beispielsweise das Verbindungsschaltelement zwischen der Verbindungsstellung und der Lösestellung, insbesondere relativ zu dem Gehäuse und/oder translatorisch, bewegt werden. In dem Verbindungszustand, insbesondere in der Verbindungsstellung, ist die erste Komponente mittels des Verbindungsschaltelements drehfest mit der zweiten Komponente verbunden, sodass sich insbesondere dann, wenn die Getriebevorrichtung angetrieben wird, das heißt. wenn wenigstens ein Drehmoment in die Getriebevorrichtung eingeleitet wird, die drehfest miteinander verbundenen Komponenten gemeinsam beziehungsweise gleichzeitig um eine Komponentendrehachse drehen.

Bei der Komponentendrehachse handelt es sich beispielsweise um die zuvor genannte Drehachse, insbesondere um die zuvor genannte Hauptdrehachse. In dem Lösezustand beziehungsweise in der Lösestellung jedoch gibt das Verbindungsschaltelement die erste Komponente und die zweite Komponente für eine relativ zueinander sowie beispielsweise um die Komponentendrehachse verlaufende Drehung der ersten Komponente und der zweiten Komponente frei, sodass sich insbesondere dann, wenn die Getriebevorrichtung angetrieben wird, die erste Komponente und die zweite Komponente, insbesondere um die Komponentendrehachse, relativ zueinander drehen beziehungsweise relativ zueinander drehen können.

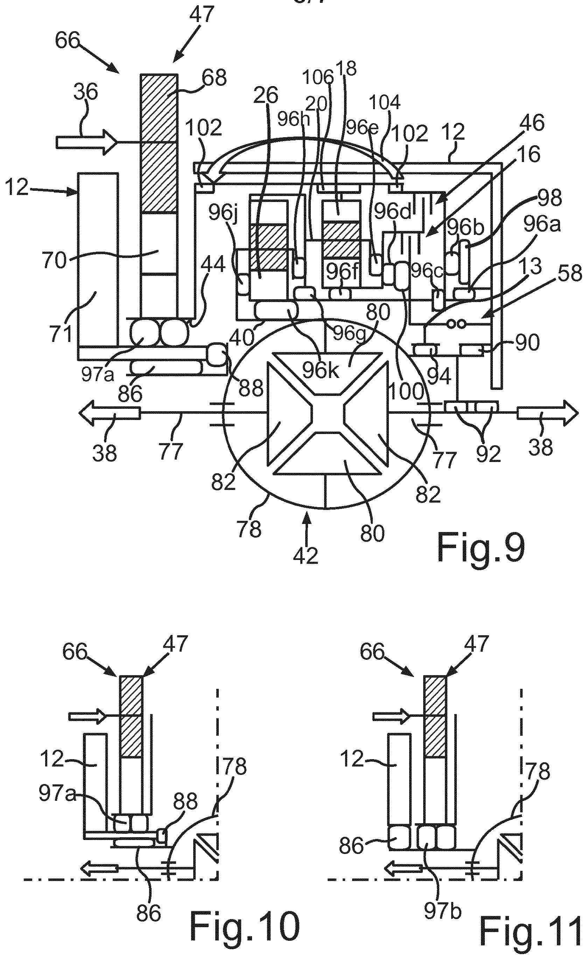

Weitere Vorteile, Merkmale und Einzelheiten der Erfindung ergeben sich aus der nachfolgenden Beschreibung sowie anhand der Zeichnung, wobei lediglich die in Fig.9 dargestellte und als achte Ausführungsform bezeichnete, elektrische Antriebsvorrichtung alle in Anspruch 1 genannten Merkmale aufweist.

Die Zeichnung zeigt in:
- Fig. 1: eine schematische Darstellung einer elektrischer Antriebsvorrichtung gemäß einer ersten Ausführungsform;
- Fig. 2: eine schematisch Darstellung der elektrischen Antriebsvorrichtung gemäß einer zweiten Ausführungsform;
- Fig. 3: eine schematische Darstellung der elektrischen Antriebsvorrichtung gemäß einer dritten Ausführungsform;
- Fig. 4: eine schematische Darstellung der elektrischen Antriebsvorrichtung gemäß einer vierten Ausführungsform;
- Fig. 5: eine schematische Darstellung der elektrischen Antriebsvorrichtung gemäß einer fünften Ausführungsform;
- Fig. 6: eine schematische Darstellung der elektrischen Antriebsvorrichtung gemäß einer sechsten Ausführungsform;
- Fig. 7: eine schematische Darstellung der Getriebevorrichtung gemäß einer siebten Ausführungsform;
- Fig. 8: eine Darstellung einer räumlichen Anordnung einer achten Ausführungsform
- Fig. 9: eine schematische Darstellung der elektrischen Antriebsvorrichtung gemäß einer achten Ausführungsform;
- Fig. 10: ausschnittsweise eine schematische Darstellung der elektrischen Antriebsvorrichtung gemäß einer neunten Ausführungsform;
- Fig. 11.: ausschnittsweise eine schematische Darstellung der elektrischen Antriebsvorrichtung gemäß einer 10. Ausführungsform; und
- Fig. 12: ausschnittsweise eine schematische Darstellung der elektrischen Antriebsvorrichtung gemäß einer 11. Ausführungsform.

In den Figuren sind gleiche oder funktionsgleiche Elemente mit gleichen Bezugszeichen versehen.

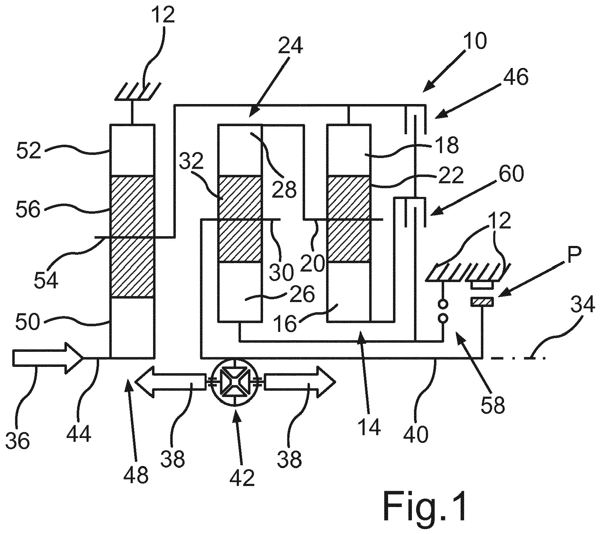

Fig. 1 zeigt in einer schematischen Darstellung eine erste Ausführungsform einer elektrischen Antriebsvorrichtung 10 für ein Kraftfahrzeug, insbesondere für einen Kraftwagen wie beispielsweise einen Personenkraftwagen. Das Kraftfahrzeug ist mittels der elektrischen Antriebsvorrichtung 1, insbesondere rein, elektrisch antreibbar, sodass das Kraftfahrzeug als ein Elektrofahrzeug, insbesondere als ein batterieelektrisches Fahrzeug, ausgebildet sein kann. Wie aus Fig. 1 erkennbar ist, umfasst die elektrische Antriebsvorrichtung 1 eine Getriebevorrichtung 10. Insbesondere wird die Getriebevorrichtung 10 für einen elektrischen Antrieb eines Kraftfahrzeugs verwendet. Der elektrische Antrieb umfasst somit beispielsweise die Getriebevorrichtung 10 und wenigstens eine in den Fig. nicht dargestellte elektrische Maschine, mittels welcher die Getriebevorrichtung 10 und über diese Räder des Kraftfahrzeugs und somit das Kraftfahrzeug insgesamt angetrieben werden können. Somit kann der zuvor genannte elektrische Antrieb die elektrische Antriebsvorrichtung 1 sein.

Die Getriebevorrichtung 10 umfasst ein in Fig. 1 besonders schematisch dargestelltes Gehäuse 12 sowie einen in dem Gehäuse 12 aufgenommenen ersten Planetenradsatz 14, welcher auch einfach als erster Planetensatz bezeichnet wird. Der erste Planetenradsatz 14 umfasst ein erstes Sonnenrad 16, ein erstes Hohlrad 18 und einen ersten Planetenträger 20, wobei das erste Sonnenrad 16, das erste Hohlrad 18 und der erste Planetenträger 20 erste Bauelemente des ersten Planetenradsatzes 14 sind beziehungsweise auch als erste Bauelemente bezeichnet werden. Außerdem umfasst der erste Planetenradsatz 14 wenigstens ein oder mehrere erste Planetenräder 22, wobei das jeweilige erste Planetenrad 22 einerseits mit dem ersten Sonnenrad 16 und andererseits mit dem Hohlrad 1 kämmt und drehbar an dem zugehörigen ersten Planetenträger 20 gelagert ist.

Die Getriebevorrichtung 10 umfasst ferner einen in dem Gehäuse 12 aufgenommenen zweiten Planetenradsatz 24, welcher auch einfach als zweiter Planetensatz bezeichnet wird. Der zweite Planetenradsatz 24 umfasst ein zweites Sonnenrad 26, ein zweites Hohlrad 28 und einen zweiten Planetenträger 30, wobei das Sonnenrad 26, das zweite Hohlrad 28 und der zweite Planetenträger 30 zweite Bauelemente des zweiten Planetenradsatzes 24 beziehungsweise auch als zweite Bauelemente bezeichnet werden. Des Weiteren umfasst der zweite Planetenradsatz 24 wenigstens ein oder mehrere zweite Planetenräder 32, wobei das jeweilige zweite Planetenrad 32 einerseits mit dem zweiten Sonnenrad 26 und andererseits mit dem zweiten Hohlrad 28 kämmt und dabei drehbar an dem zugehörigen zweiten Planetenträger 30 gelagert ist. Der jeweilige Planetenträger 20 beziehungsweise 30 wird auch als Steg bezeichnet.

Die jeweiligen Bauelemente sind insbesondere dann, wenn sie nicht drehfest an dem Gehäuse 12 festgelegt sind, um eine auch als Hauptdrehachse bezeichnete Drehachse 34 relativ zu dem Gehäuse 12 drehbar beziehungsweise drehen sich um die Drehachse 34 relativ zu dem Gehäuse 12, wenn die Getriebevorrichtung 10 angetrieben wird. Angetrieben wird die Getriebevorrichtung 10 beispielsweise dadurch, dass in Fig. 1 durch Pfeil 36 veranschaulichte und auch als Antriebsmomente oder Antriebsdrehmomente bezeichnete Drehmomente in die Getriebevorrichtung 10 eingeleitet werden. Die Antriebsmomente werden beispielsweise von wenigstens einer zum Antreiben der Getriebevorrichtung 10 und des Kraftfahrzeugs ausgebildeten Antriebseinheit bereitgestellt, welche beispielsweise als die zuvor genannte elektrische Maschine ausgebildet ist. Die Antriebsmomente werden beispielsweise mittels der Getriebevorrichtung 10 in davon unterschiedliche, auch als Abtriebsmomente oder Abtriebsdrehmomente bezeichnete und in Fig. 1 durch Pfeile 38 veranschaulichte Drehmomente umgewandelt, wobei die Abtriebsmomente von der Getriebevorrichtung 10 bereitgestellt und genutzt werden, um das Kraftfahrzeug anzutreiben.

Wie im Folgenden noch genauer erläutert wird, ist das zweite Sonnenrad 26 mit dem Gehäuse 12 drehfest verbunden oder verbindbar. Des Weiteren ist das zweite Hohlrad 28 mit dem ersten Planententräger 20 drehfest verbunden oder verbindbar. Die Getriebevorrichtung 10 umfasst darüber hinaus eine permanent drehfest mit dem zweiten Planetenträger 30 verbundene Abtriebswelle 40, über welche die Getriebevorrichtung 10 die zuvor genannten Abtriebsmomente zum Antreiben des Kraftfahrzeugs bereitstellen kann beziehungsweise bereitstellt, insbesondere dann, wenn die Getriebevorrichtung 10 angetrieben wird.

Ferner umfasst die Getriebevorrichtung 10 ein beispielsweise als Kegelraddifferential ausgebildetes Differentialgetriebe 42, welches ein Achsgetriebe und somit einer Achse des Kraftfahrzeugs zugeordnet ist. Die genannte Achse umfasst wenigstens zwei Räder, welche über das Achsgetriebe und die Getriebevorrichtung 10 von der Antriebseinheit, insbesondere von der elektrischen Maschine, antreibbar sind. Dabei lässt das Achsgetriebe einen Drehzahlausgleich zwischen den Rädern der Achse zu, sodass sich die Räder der Achse insbesondere bei einer Kurvenfahrt mit unterschiedlichen Drehzahlen drehen können. Dabei kann sich insbesondere das kurvenäußere Rad mit einer höheren Drehzahl als das kurveninnere Rad drehen. Dies bedeutet, dass die Getriebevorrichtung 10 die Abtriebsmomente über die Abtriebswelle 40 bereitstellt. Von der Abtriebswelle 40 werden die Abtriebsmomente auf das Achsgetriebe, insbesondere auf ein Tellerrad des Achsgetriebes, übertragen, sodass die Abtriebsmomente über das Achsgetriebe auf die Räder übertragen werden.

Die Abtriebswelle 40 ist an einem Abtrieb beziehungsweise auf einer Abtriebsseite der Getriebevorrichtung 10 angeordnet, da die Getriebevorrichtung 10 über den Abtrieb die Abtriebsmomente bereitstellt. Demgegenüber ist beispielsweise eine Antriebswelle 44 der Getriebevorrichtung 10 an einem Antrieb beziehungsweise auf einer Antriebsseite der Getriebevorrichtung 10 angeordnet, da über den Antrieb die Antriebsmomente in die Getriebevorrichtung 10 eingeleitet werden.

Um nun eine besonders kompakte und verlustarme Bauweise sowie eine besonders vorteilhafte Funktionalität realisieren zu können, ist dem ersten Planetenradsatz 14 ein Verblockungsschaltelement 46 zugeordnet, mittels welchem eines der ersten Bauelemente mit einem anderen der ersten Bauelemente oder mit einem der zweiten Bauelemente drehfest miteinander verbindbar ist. Bei den mittels des Verblockungsschaltelements 46 miteinander drehfest verbindbaren und dadurch verblockbaren Bauelementen handelt es sich bei der in Fig. 1 gezeigten ersten Ausführungsform um zwei der ersten Bauelemente und dabei um das erste Sonnenrad 16 und das erste Hohlrad 18.

Bei der in Fig. 1 veranschaulichten ersten Ausführungsform umfasst die Getriebevorrichtung 10 eine Übersetzungsstufe 47 in Form eines in dem Gehäuse 12 aufgenommenen dritten Planetenradsatzes 48, welcher einfach auch als dritter Planetensatz bezeichnet wird und ein drittes Sonnenrad 50, ein drittes Hohlrad 52 und einen dritten Planetenträger 54 aufweist. Das dritte Sonnenrad 50, das dritte Hohlrad 52 und der dritte Planetenträger 54 sind dritte Bauelemente des dritten Planetenradsatzes 48 beziehungsweise werden auch als dritte Bauelemente bezeichnet. Auch die dritten Bauelemente können sich insbesondere dann, wenn sie nicht drehfest an dem Gehäuse 12 festgelegt sind und wenn die Getriebevorrichtung 10 angetrieben wird, um die Drehachse 34 relativ zu dem Gehäuse 12 drehen. Dabei umfasst der dritte Planetenradsatz 48 wenigstens ein oder mehrere dritten Planetenräder 56, wobei das jeweilige dritte Planetenrad 56 einerseits mit dem dritten Sonnenrad 50 und andererseits mit dem dritten Hohlrad 52 kämmt und dabei drehbar an dem zugehörigen dritten Planetenträger 54 gelagert ist. Dabei ist das dritte Sonnenrad 50 permanent drehfest mit der Antriebswelle 44 verbunden, sodass die von der Antriebseinheit bereitgestellten und durch den Pfeil 36 veranschaulichten Antriebsmomente auf die Antriebswelle 44 und von dieser auf das dritte Sonnenrad 50 übertragen werden, sodass beispielsweise das dritte Sonnenrad 50 dem Antrieb der Getriebevorrichtung 10 zugeordnet beziehungsweise auf der Antriebsseite angeordnet ist. Außerdem ist das dritte Hohlrad 52 permanent drehfest mit dem Gehäuse 12 verbunden und somit permanent drehfest an dem Gehäuse 12 festgelegt. Des Weiteren ist es bei der ersten Ausführungsform vorgesehen, dass der dritte Planetenträger 54 permanent drehfest mit dem ersten Hohlrad 18 verbunden ist. Des Weiteren ist bei der ersten Ausführungsform das zweite Hohlrad 28 permanent drehfest mit dem ersten Planetenträger 20 verbunden. Bei der ersten Ausführungsform ist darüber hinaus ein erstes Kopplungsschaltelement 58 vorgesehen, mittels welchem das zweite Sonnenrad drehfest mit dem Gehäuse 12 verbindbar ist. Des Weiteren ist ein zweites Kopplungsschaltelement 60 vorgesehen, mittels welchem das zweite Sonnenrad 26 drehfest mit dem ersten Sonnenrad 16 verbindbar ist. Des Weiteren umfasst die Getriebevorrichtung 10 eine Parksperre P, mittels welcher die Abtriebswelle 40 drehfest an dem Gehäuse 12 festlegbar ist. Dadurch können die über das Differentialgetriebe 42 mit der Abtriebswelle 40 gekoppelten Räder gegen eine unerwünschte Drehung gesichert werden, sodass das Kraftfahrzeug gegen ein Wegrollen gesichert werden kann.

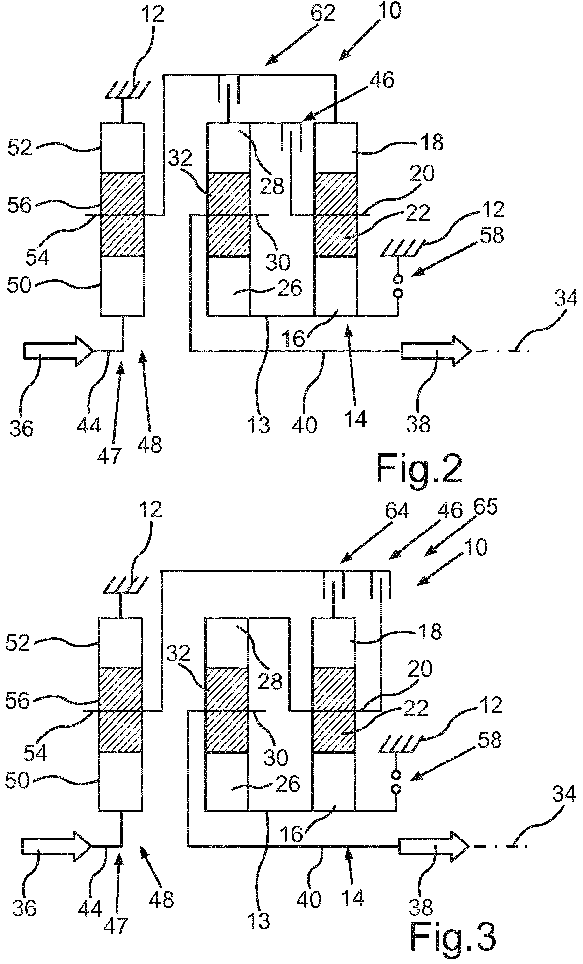

Fig. 2 zeigt eine zweite Ausführungsform der Getriebevorrichtung 10. Bei der zweiten Ausführungsform ist der dritte Planetenträger 54 permanent drehfest mit dem ersten Hohlrad 18 verbunden. Außerdem ist ein drittes Kopplungsschaltelement 62 vorgesehen, mittels welchem das zweite Hohlrad 28 drehfest mit dem ersten Hohlrad 18 verbindbar ist. Da bei der zweiten Ausführungsform der dritte Planetenträger 54 und das erste Hohlrad 18 permanent drehfest miteinander verbunden sind, kann bei der zweiten Ausführungsform das zweite Hohlrad 28 mittels des dritten Kopplungsschaltelements 62 drehfest mit dem dritten Planetenträger 54 und dem ersten Hohlrad 18 verbunden werden. Außerdem ist das erste Sonnenrad 16 permanent drehfest mit dem zweiten Sonnenrad 26 verbunden, sodass die Sonnenräder 16 und 26 mittels des ersten Kopplungsschaltelements 58 drehfest an dem Gehäuse 12 festgelegt werden können. Bei der zweiten Ausführungsform sind die mittels des Verblockungsschaltelements 46 drehfest miteinander verbindbaren und somit miteinander verblockbaren Bauelemente der erste Planetenträger 20 und das zweite Hohlrad 28.

Fig. 3 zeigt eine dritte Ausführungsform, welche sich insbesondere dadurch von der zweiten Ausführungsform unterscheidet, dass das zweite Hohlrad 28 permanent drehfest mit dem ersten Planetenträger 20 verbunden ist. Außerdem ist ein viertes Kopplungsschaltelement 64 vorgesehen, mittels welchem der dritte Planetenträger 54 drehfest mit dem ersten Hohlrad 18 verbindbar ist. Des Weiteren ist der dritte Planetenträger 54 mittels eines fünften Kopplungsschaltelementes 65 drehfest mit dem ersten Planetenträger 20 verbindbar. In dieser Ausführungsform fungieren das vierte Kopplungsschaltelement 64 und das fünfte Kopplungsschaltelement 65 zusammen als Verblockungsschaltelement 46, da bei gemeinsamem Schließen des vierten Kopplungsschaltelement 64 und des fünften Kopplungsschaltelements 65 der erste Planetenträger 20 mit dem ersten Hohlrad 18 verblockt wird.

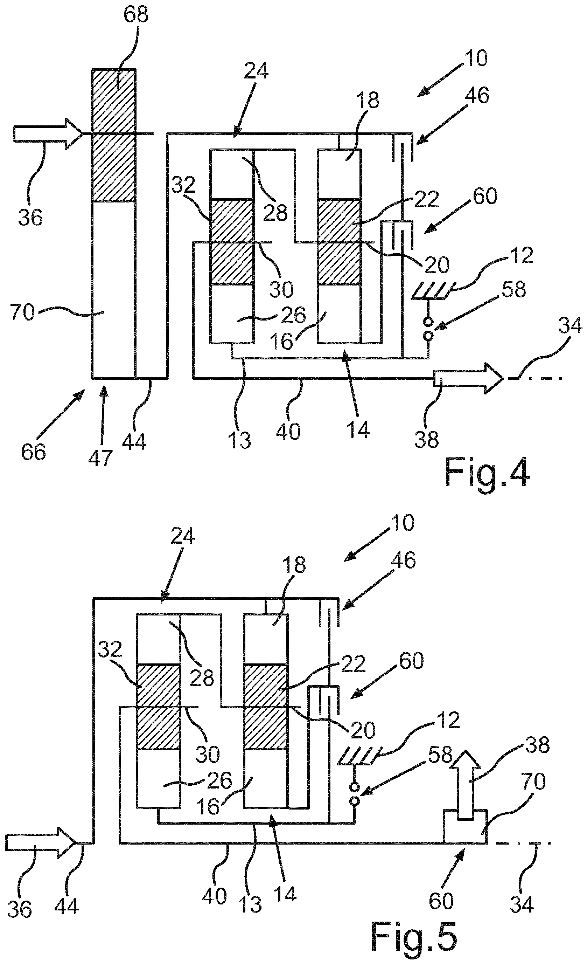

Fig. 4 zeigt eine vierte Ausführungsform, welche sich insbesondere dadurch von der ersten, zweiten und dritten Ausführungsform unterscheidet, dass die Übersetzungsstufe 47 nicht in Form des dritten Planetenradsatzes 48 ausgebildet ist. Die Übersetzungsstufe 47 ist hier als eine Stirnradstufe 66 ausgebildet, welche ein erstes Zahnrad 68 und ein mit dem ersten Zahnrad 68 kämmendes zweites Zahnrad 70 aufweist. Das zweite Zahnrad 70 ist dabei drehfest mit der Antriebswelle 44 verbunden, welche permanent drehfest mit dem ersten Hohlrad 18 verbunden ist. Im Übrigen entspricht die vierte Ausführungsform der ersten Ausführungsform.

Fig. 5 zeigt eine fünfte Ausführungsform, bei welcher die Stirnradstufe 66, von welcher in Fig. 5 lediglich das zweite Zahnrad 70 gezeigt ist, dem Abtrieb und nicht dem Antrieb wie bei der vierten Ausführungsform zugeordnet ist. Dabei ist das zweite Zahnrad 70 permanent drehfest mit der Abtriebswelle 40 verbunden, und im Übrigen entspricht die fünfte Ausführungsform der vierten Ausführungsform.

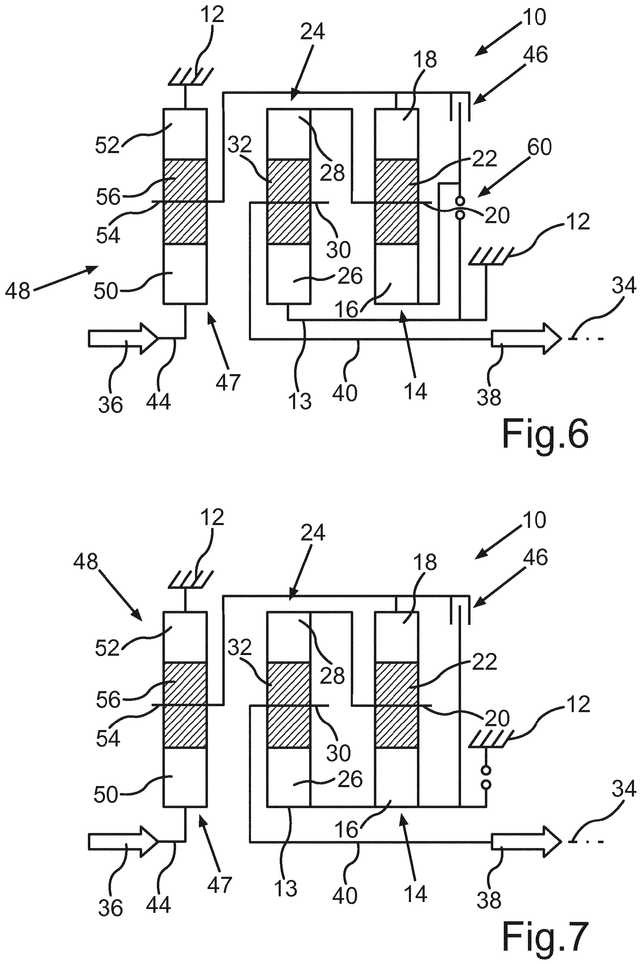

Fig. 6 zeigt eine sechste Ausführungsform, bei welcher das zweite Sonnenrad 26 permanent drehfest mit dem Gehäuse 12 verbunden ist. Durch drehfestes Verbinden des ersten Sonnenrads 16 mit dem zweiten Sonnenrad 26 über das zweite Kopplungsschaltelement 60 kann das erste Sonnenrad 16 drehfest an dem Gehäuse 12 festgelegt werden.

Schließlich zeigt Fig. 7 eine siebte Ausführungsform, bei welcher die Sonnenräder 16 und 26 permanent drehfest miteinander verbunden sind. Außerdem können die Sonnenräder 16 und 26 über das Verblockungsschaltelement 46 drehfest mit dem ersten Hohlrad 18 und mit dem dritten Planetenträger 54 verbunden werden, da dieser permanent drehfest mit dem ersten Hohlrad 18 verbunden ist. Zumindest eines der genannten Schaltelemente, mehrere Schaltelemente oder alle Schaltelemente, mehrere Schaltelemente oder alle Schaltelemente ist beziehungsweise sind als formschlüssiges und/oder reibschlüssiges Schaltelement und somit beispielsweise als Klauen- oder Lamellenkupplung ausgebildet.

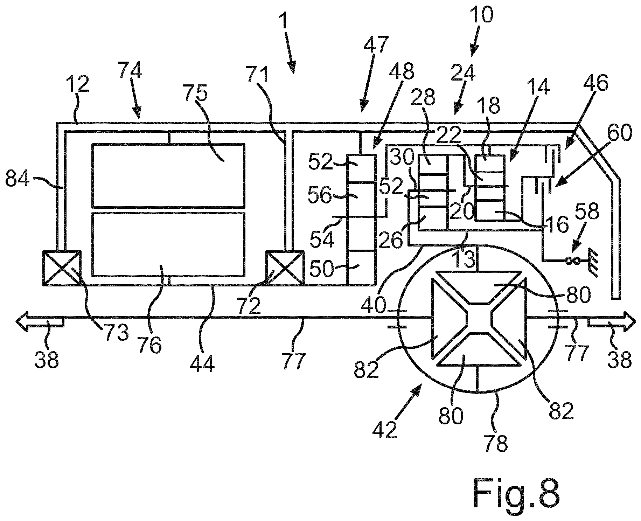

Fig. 8 zeigt eine räumliche Anordnung von Komponenten der elektrischen Antriebsvorrichtung 1. Erfindungsgemäß ergibt sich eine sehr kompakte Gesamtanordnung dadurch, dass das Differentialgetriebe 42 radial innerhalb des ersten Planetenradsatzes 14 und des zweiten Planetenradsatzes 24 und axial im Wesentlichen im Bereich des ersten Planetenradsatzes 14 und des zweiten Planetenradsatzes 24 angeordnet ist. Ein Außendurchmesser des Differentialgetriebes 42 ist jeweils kleiner als ein Durchmesser einer Verzahnung des ersten Sonnenrades 16 und als ein Durchmesser einer Verzahnung des zweiten Sonnenrades 26. Axial überdeckt sich das Differentialgetriebe 42 zumindest teilweise mit dem ersten Planetenradsatz 14 und zumindest teilweise mit dem zweiten Planetenradsatz 24. Aus Fig. 8 ist insbesondere erkennbar, dass unter dem Merkmal, dass das Differentialgetriebe 42 radial innerhalb des ersten Planetenradsatzes 14 und des zweiten Planetenradsatzes 24 angeordnet ist, zu verstehen ist, dass das Differentialgetriebe 42 koaxial zu dem Planetenradsätzen 14 und 24 angeordnet ist, wobei der größte Außenradius des Differentialgetriebes 42 kleiner ist als der jeweilige größte Außenradius der Planetenradsätze 14 und 24. Außerdem kann unter dem Merkmal, dass das Differentialgetriebe 42 axial im Wesentlichen im Bereich der Planetenradsätze 14 und 24 angeordnet ist, verstanden werden, dass jeweilige Teilbereiche des Differentialgetriebes 42 in radialer Richtung des Differentialgetriebes 42 nach außen hin durch die Planetenradsätze 14 und 24 überdeckt sind. Dadurch kann eine besonders kompakte Bauform der elektrischen Antriebsvorrichtung 1 realisiert werden.

Die elektrische Antriebsvorrichtung 1 weist wenigstens oder genau eine elektrische Maschine 74 auf, welche zumindest teilweise, insbesondere zumindest überwiegend oder vollständig, in dem Gehäuse 12 angeordnet beziehungsweise aufgenommen ist. Die elektrische Maschine 74 umfasst einen Stator 75 und einen Rotor 76, welcher von dem Stator 75 antreibbar und dadurch um eine Maschinendrehachse relativ zu dem Stator 75 drehbar ist. Vorzugsweise fällt die Maschinendrehachse mit der auch als Hauptdrehachse bezeichneten Drehachse 34 zusammen beziehungsweise die Maschinendrehachse verläuft parallel zur Drehachse 34. Somit ist es vorzugsweise vorgesehen, dass die elektrische Maschine 74, insbesondere ihr Rotor 76, koaxial zu dem Planetenradsätzen 14 und 24 sowie koaxial zu dem dritten Planetenradsatz 48 angeordnet ist, wobei vorzugsweise die Planetenradsätze 14, 24 und 48 koaxial zueinander angeordnet sind. Ferner ist es vorzugsweise vorgesehen, dass die elektrische Maschine 74 koaxial zu dem Differentialgetriebe 42 angeordnet ist, und dessen Differentialkorb 78 um die Drehachse 34 relativ zu dem Gehäuse 12 drehbar ist.

Die elektrische Maschine 74 kann über ihren Rotor 76 die zuvor genannten Antriebsmomente bereitstellen, welche von dem Rotor 76, insbesondere unmittelbar, auf die Antriebswelle 44 übertragbar sind beziehungsweise übertragen werden. Hierdurch können die von dem Rotor bereitgestellten Antriebsmomente in die Getriebevorrichtung 10, insbesondere über die Antriebswelle 44, eingeleitet werden, wobei bezogen auf einen von dem Rotor 76 zu den Planetenradsätzen 14, 24 und 48 verlaufenden Drehmomentenfluss die Planetenradsätze 14, 24 und 48 stromab der Antriebswelle 44 angeordnet sind. Insbesondere ist es vorgesehen, dass die Antriebswelle 44 permanent drehfest mit dem Rotor 76 verbunden ist oder die Antriebswelle 44 ist drehfest mit dem Rotor 76 verbindbar.

Außerdem ist besonders gut aus Fig. 8 erkennbar, dass das Gehäuse 12 eine auch als Wand oder Gehäusewandung oder Wandung bezeichnete erste Gehäusewand 71 aufweist, welche beispielsweise in axialer Richtung der elektrischen Maschine 74 zwischen der elektrischen Maschine 74 und dem jeweiligen Planetenradsatz 14, 24 beziehungsweise 48 angeordnet ist. Dies bedeutet beispielsweise, dass die elektrische Maschine 74 in axialer Richtung der elektrischen Maschine 74 zumindest teilweise, insbesondere zumindest überwiegend, zu dem jeweiligen Planetenradsatz 14, 24 beziehungsweise 48 hin durch die erste Gehäusewand 71 überdeckt ist. Die axiale Richtung der elektrischen Maschine fällt dabei mit der Maschinendrehachse beziehungsweise mit der Drehachse 34 zusammen.

Der zuvor beschriebene Drehmomentenfluss wird auch als Momentenfluss zwischen der elektrischen Maschine 74 und dem ersten Planetenradsatz 14 bezeichnet, da die von der elektrischen Maschine über den Rotor 76 bereitgestellten Antriebsmomente über den Drehmomentenfluss beziehungsweise entlang des Drehmomentenflusses von der elektrischen Maschine 74 auf den ersten Planetenradsatz 14 übertragen werden. Bezüglich dieses auch als Momentenfluss bezeichneten Drehmomentenflusses von der elektrischen Maschine 74 zu dem ersten Planetenradsatz 14 beziehungsweise umgekehrt ist die gemäß Fig. 8 als der dritte Planetenradsatz 48 ausgebildete Übersetzungsstufe 47 zwischen der elektrischen Maschine 74 und den ersten Planetenradsatz 14, das heißt stromab der elektrischen Maschine 74 und stromauf des ersten Planetenradsatzes 14 angeordnet. Des Weiteren ist die Übersetzungsstufe 47 (insbesondere der dritte Planetenradsatz 48) axial, das heißt in axialer Richtung der elektrischen Maschine 47 zwischen der elektrischen Maschine 74 und dem Differentialgetriebe 42 angeordnet. Dabei ist beispielsweise zumindest ein Teilbereich des Differentialgetriebes 42 in axialer Richtung des Differentialgetriebes 42 und somit beispielsweise entlang der Drehachse 34 zu der elektrischen Maschine 74 hin durch die Übersetzungsstufe 47 überdeckt. Außerdem ist die Übersetzungsstufe 47 axial, das heißt in axialer Richtung der elektrischen Maschine 47 zwischen der elektrischen Maschine 74 und dem ersten Planetenradsatz 14 angeordnet, sodass der erste Planetenradsatz 14 entlang seiner axialen Richtung zumindest teilweise, insbesondere zumindest überwiegend oder vollständig, zu der elektrischen Maschine 74 hin durch die Übersetzungsstufe 47 überdeckt beziehungsweise überlappt ist.

Das Differentialgetriebe 42 weist einen Differentialkorb 78 sowie Ausgleichsräder 80 auf, welche vorliegend als Zahnräder und dabei vorzugsweise als Kegelräder ausgebildet sind. Die Ausgleichsräder 80 sind drehbar an dem Differentialkorb 78 gelagert und somit relativ zu dem Differentialkorb 78 drehbar, wobei der Differentialkorb 78 zusammen mit den Ausgleichsrädern 80 um die Drehachse 34 relativ zu dem Gehäuse 12 drehbar ist beziehungsweise gedreht wird, wenn das Differentialgetriebe 42, insbesondere von von der elektrischen Maschine 74 bereitgestellten Antriebsmomenten, angetrieben wird.

Des Weiteren weist das Differentialgetriebe 42 Abtriebsräder 82 auf, welche vorliegend als Zahnräder und dabei vorzugsweise als Kegelräder ausgebildet sind. Die Abtriebsräder 82 kämmen mit den Ausgleichrädern 80 und sind um die Drehachse 34 relativ zu dem Gehäuse 12 und/oder relativ zu dem Differentialkorb 78 drehbar. Außerdem ist das jeweilige Abtriebsrad 82, insbesondere permanent, drehfest mit einer jeweiligen Seitenwelle 77 verbunden, sodass über die Seitenwellen 77 jeweilige Räder des Kraftfahrzeugs angetrieben werden können. Dadurch können die Räder über die Seitenwellen 77, das Differentialgetriebe 42 und die Getriebevorrichtung 10 von der elektrischen Maschine 74, insbesondere elektrisch, angetrieben werden. Aus Fig. 8 ist dabei erkennbar, dass die Seitenwellen 77 die durch die Pfeile 38 veranschaulichten Drehmomente zum Antreiben der Räder bereitstellen können.

Das Gehäuse 12 weist darüber hinaus eine weitere, einfach auch als Wand, Wandung oder Gehäusewandung bezeichnete zweite Gehäusewand 84 auf. Dabei ist beispielsweise die elektrische Maschine 74 entlang ihrer axialen Richtung zumindest teilweise, insbesondere zumindest überwiegend oder vollständig, zwischen den Gehäusewänden 71 und 84 angeordnet. Somit ist beispielsweise eine der ersten Gehäusewand 71 in axialer Richtung der elektrischen Maschine 74 abgewandte Seite der elektrischen Maschine 74 in eine mit der Maschinendrehachse zusammenfallende und von der ersten Gehäusewand 71 wegweisende Richtung zumindest teilweise, insbesondere zumindest überwiegend oder vollständig, durch die zweite Gehäusewand 84 überdeckt.

Die Antriebsvorrichtung 1 umfasst dabei Lagerelemente 72 und 73, wobei das Lagerelement 72 auch als erstes Lagerelement und das Lagerelement 73 auch als zweites Lagerelement bezeichnet wird. Das jeweilige Lagerelement 72 beziehungsweise 73 ist beispielsweise ein Wälzlager. Über die Lagerelemente 72 und 73 ist die Antriebswelle 44 zumindest drehbar an dem Gehäuse 12, insbesondere an den Gehäusewänden 71 und 84, gelagert. Insbesondere ist die Antriebswelle 44 über die Lagerelemente 72 und 73 zumindest in radialer Richtung der Antriebswelle 44 drehbar an den Gehäusewänden 71 und 84 beziehungsweise an dem Gehäuse 12 gelagert. Hierzu ist beispielsweise die Antriebswelle 44 entlang ihrer radialen Richtung über die Lagerelemente 72 und 73 an dem Gehäuse 12, insbesondere an den Gehäusewänden 71 und 84, abgestützt und somit drehbar gelagert. Dabei ist die elektrische Maschine 74 in axialer Richtung der elektrischen Maschine 74 zwischen den Lagerelementen 72 und 73 angeordnet, sodass beispielsweise das Lagerelement 72 in axialer Richtung der elektrischen Maschine 74 zu dem Lagerelement 73 hin zumindest teilweise, insbesondere zumindest überwiegend oder vollständig, durch die elektrische Maschine 74 überdeckt ist. Alternativ oder zusätzlich ist das Lagerelement 73 in axialer Richtung der elektrischen Maschine 74 zu dem Lagerelement 72 hin zumindest teilweise, insbesondere zumindest überwiegend oder vollständig, durch die elektrische Maschine 74 überdeckt. Dadurch kann ein besonders kompakter Aufbau der elektrischen Antriebsvorrichtung gewährleistet werden.

Die Getriebevorrichtung 10 umfasst einen Verbindungskörper 13, welcher, insbesondere permanent, drehfest mit dem zweiten Sonnenrad 26 verbunden ist. Der Verbindungskörper 13 kann, insbesondere permanent, drehfest mit dem Gehäuse 12, insbesondere mit einer Wand des Gehäuses 12, verbunden sein, wobei beispielsweise der Verbindungskörper 13, insbesondere permanent, drehfest mit der ersten Gehäusewand 71 verbunden sein kann. Bei dem in Fig. 8 gezeigten Ausführungsbeispiel jedoch ist der Verbindungskörper 13 mit dem Gehäuse 12 beziehungsweise mit einer Wand wie beispielsweise mit der ersten Gehäusewand 71 des Gehäuses 12 drehfest verbindbar. Hierzu ist bei dem in Fig. 8 gezeigten Ausführungsbeispiel das erste Kopplungsschaltelement 58 vorgesehen, mittels welchem der Verbindungskörper 13 und über diesen das zweite Sonnenrad 26 drehfest mit dem Gehäuse 12 beziehungsweise mit dessen Wand verbindbar sind. Dabei ist vorzugsweise der gesamte Verbindungskörper 13 radial innerhalb des ersten Planetenträgers 20 und des zweiten Planetenträgers 30 angeordnet. Vorzugsweise ist der erste Verbindungskörper radial innerhalb des ersten Sonnenrades 16 angeordnet. Vorzugsweise durchdringt der erste Verbindungskörper 13 das erste Sonnenrad 16. Vorzugsweise ist in einem axialen Bereich des ersten Sonnenrades 16 ein Außendurchmesser des Verbindungskörpers 13 kleiner als ein Innendurchmesser des Sonnenrades 16.

Außerdem ist aus Fig. 8 erkennbar, dass die Abtriebswelle 40, über welche Drehmomente aus der Getriebevorrichtung 10 ausleitbar und beispielsweise auf das Differentialgetriebe 42, insbesondere auf den Differentialkorb 78, übertragbar sind, insbesondere permanent, drehfest mit dem Differentialkorb 78 verbunden. Ferner ist besonders bevorzugt der zweite Planetenträger 30, insbesondere permanent, drehfest mit dem Differentialkorb 78 verbunden.

Fig. 9 zeigt eine achte Ausführungsform, bei welcher die Übersetzungsstufe 47 nicht etwa als ein dritter Planetenradsatz, sondern als die bereits in Bezug auf Fig. 4 beschriebene Stirnradstufe 66 ausgebildet sind. Aus Fig. 9 ist erkennbar, dass der Differentialkorb 78 über ein drittes Lagerelement 86 und ein viertes Lagerelement 88 radial beziehungsweise axial an dem Gehäuse 12 drehbar gelagert ist. Darüber hinaus ist der Differentialkorb 78 über ein fünftes Lagerelement 90 drehbar an dem Gehäuse 12 gelagert, insbesondere in radialer Richtung. Die in Fig. 9 rechte Seitenwelle 77 ist über ein sechstes Lagerelement 92, insbesondere radial, an dem Differentialkorb 78 und über diesen an dem Gehäuse 12 gelagert.

Außerdem ist der Verbindungskörper 13 und damit auch das zweite Sonnenrad 26 vorteilhaft über ein siebtes Lagerelement 94, insbesondere radial, an dem Differentialkorb 78 und über diesen an dem Gehäuse 12 gelagert. Das zweite Sonnenrad 26 ist mittels des siebten Lagerelementes 94 unmittelbar gegenüber dem Differentialkorb 78 abgestützt bzw. gelagert. "Unmittelbar" bedeutet hier, dass zwischen dem Sonnenrad 26 und dem siebten Lagerelement 94 kein weiteres Lagerelement in einem Abstützungskraftfluss angeordnet ist, und dass zwischen dem siebten Lagerelement 94 und dem Differentialkorb 78 ebenfalls kein weiteres Lagerelement im Abstützungskraftfluss angeordnet ist.

Außerdem sind aus Fig. 9 weitere Lagerelemente, ein achtes bis zu einem siebzehnten Lagerelemetn 96a-k erkennbar. Über das achte Lagerelement 96a ist beispielsweise das Verblockungsschaltelement 46 drehbar an dem Gehäuse 12 gelagert, und über das neunte Lagerelement 96b ist das Verblockungsschaltelement 46 drehbar an dem Gehäuse 12 gelagert.

Über das zehnte Lagerelement 96c ist das zweite Sonnenrad 26 gegenüber einem Außenlamellenträger der Verblockungsschaltelementes 46 drehbar axial gelagert, und über das elfte Lagerelement 96d ist das erste Sonnenrad 16 gegenüber dem Verbindungskörper 13 axial gelagert.

Über das zwölfte Lagerelement 96e ist der erste Planetenträger 20 gegenüber dem ersten Sonnenrad 16 axial gelagert.

Über das dreizehnte Lagerelement 96f ist das erste Sonnenrad 16 gegenüber dem Verbindungskörper 13 radial drehbar gelagert.

Über das vierzehnte Lagerelement 96g ist der erste Planetenträger 20 radial gegenüber dem zweiten Sonnenrad 26 drehbar gelagert

Besonders vorteilhaft ist der zweite Planetenträger 30 mittels eines Lagerelementes in Form des fünfzehnten Lagerelementes 96h axial gegenüber dem ersten Planetenträger 20 und mittels eines weiteren Lagerelementes in Form des sechzehnten Lagerelementes 96j axial gegenüber dem zweiten Sonnenrad 26 gelagert. Dabei ist vorteilhaft das fünfzehnte Lagerelement 96h axial zwischen dem ersten Planetenradsatz 14 und dem zweiten Planetenradsatz 24 angeordnet, und das sechzehnte Lagerelement 96j axial zwischen dem zweiten Planetenradsatz 24 und der Übersetzungsstufe 47 angeordnet.

Mittels eines anderen Lagerelementes in Form des zwölften Lagerelements 96e ist der erste Planetenträger 20 vorteilhaft gegenüber dem ersten Sonnenrad 16 axial gelagert. Das zwölfte Lagerelement 96e ist vorteilhaft axial gesehen auf der dem zweiten Planetenradsatz 24 abgewandten Seite des ersten Planetenradsatzes 14 angeordnet.

Mittels eines zusätzlichen Lagerelementes in Form des elften Lagerelementes 96d ist vorteilhaft das erste Sonnenrad 16 axial gegenüber dem Verbindungskörper 13 gelagert. Das elfte Lagerelement 96d ist dabei vorteilhaft dazu ausgebildet, ein Axialspiel zwischen dem zweiten Planetenträger 30 und dem Verbindungskörper 13 einzustellen.

Das elfte Lagerelement 96d ist vorteilhaft auf einer dem ersten Planetenradsatz 14 abgewandten Seite des zwölften Lagerelements 96e angeordnet.

Das zweite Sonnenrad 26 ist vorteilhaft mittels des siebzehnten Lagerelementes 96k unmittelbar gegenüber dem Differentialkorb 78 abgestützt bzw. gelagert. "Unmittelbar" bedeutet hier, dass zwischen dem zweiten Sonnenrad 26 und dem siebzehnten Lagerelement 96k kein weiteres Lagerelement in einem Abstützungskraftfluss angeordnet ist, und dass zwischen dem siebzehnten Lagerelement 96k und dem Differentialkorb 78 ebenfalls kein weiteres Lagerelement im Abstützungskraftfluss angeordnet ist.

Zusammen mit dem zweiten Sonnenrad 26 ist auch der Verbindungskörper 13 auf gleiche Weise gegenüber dem Differentialkorb 78 gelagert.

Somit ist besonders vorteilhaft das zweite Sonnenrad 26 über zwei, vorteilhaft als Radiallager ausgebildete, Lager, nämlich das siebte Lagerelement 94 und das siebzehnte Lagerelement 96k unmittelbar gegenüber dem Differentialkorb 78 gelagert.

In Fig. 9 ist mit 98 ein einstellbares Gesamtaxialspiel bezeichnet und mit 100 ist ein einstellbares Axialspiel des jeweiligen Planetenradsatzes 14 beziehungsweise 24 bezeichnet. In Fig. 9 ist darüber hinaus eine erste Steckverzahnung mit 102 bezeichnet, wobei die erste Steckverzahnung 102 -wie in Fig. 9 durch einen Pfeil 104 veranschaulicht ist - links oder rechts angeordnet sein kann, insbesondere je nach Gehäuseteilung und Montagekonzept. Über die erste Steckverzahnung 102 kann das zweite Zahnrad 70 des Ausführungsbeispiels der Fig. 9 oder der dritte Planetenträger 54 des Ausführungsbeispiels der Fig. 8, insbesondere permanent, drehfest mit dem ersten Hohlrad 18 und/oder mit dem Verblockungsschaltelement 46 verbunden werden.

Besonders vorteilhaft ist eine Ausgangswelle der Übersetzungsstufe 47, nämlich entweder der dritte Planetenträger 54 oder das zweite Zahnrad 70, mittels der ersten Steckverzahnung 102 drehfest mit dem Außenlamellenträger des Verblockungsschaltelementes 46 verbunden.

Die erste Steckverzahnung 102 ist dabei vorteilhaft radial außerhalb einer Innenverzahnung des ersten Hohlrades 18 angeordnet. Die erste Steckverzahnung ist dabei axial gesehen vorteilhaft entweder zwischen der Übersetzungsstufe 47 und dem zweiten Planetenradsatz 24 oder auf der dem zweiten Planetenradsatz 24 abgewandten Seite des ersten Planetenradsatzes 14 angeordnet.

Fig. 10 zeigt ein Detail der achten Ausführungsform mit einem achtzehnten Lagerelement 97a und den Lagerelementen 86 und 88. Das achtzehnte Lagerelement 97a ist dazu ausgebildet, die Stirnradstufe 66 radial gegenüber dem Gehäuse 12 zu lagern.

Fig. 11 zeigt eine neunte Ausführungsform mit einem alternativen Lagerkonzept, wobei der Differentialkorb 78 das Lagerelement 86 drehbar radial an dem Gehäuse gelagert ist. Mittels eines neunzehnten Lagerelement 97b ist in dieser Ausführungsform das zweite Zahnrad 70 der Stirnradstufe 66 gegenüber dem Differentialkorb 78 radial gelagert.

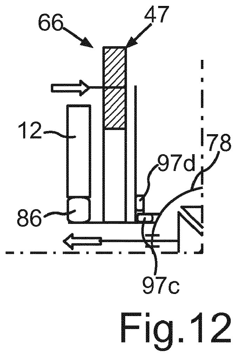

Schließlich zeigt Fig. 12 eine zehnt Ausführungsform zur Veranschaulichung eines weiteren Lagerkonzepts wobei der Differentialkorb 78 das Lagerelement 86 drehbar radial an dem Gehäuse gelagert ist. Mittels eines zwanzigsten Lagerelementes 97c ist dabei der Differentialkorb 78 radial gegenüber dem zweiten Zahnrad 70 der Stirnradstufe 66 gelagert. Mittels eines einundzwanzigsten Lagerelement 97d ist der Differentialkorb 78 axial gegenüber dem zweiten Zahnrad 70 der Stirnradstufe 66 gelagert.

### Bezugszeichenliste

- 1: elektrische Antriebsvorrichtung
- 10: Getriebevorrichtung
- 12: Gehäuse
- 13: Verbindungskörper
- 14: erster Planetenradsatz
- 16: erstes Sonnenrad
- 18: erstes Hohlrad
- 20: erster Planetenträger
- 22: erstes Planetenrad
- 24: zweiter Planetenradsatz
- 26: zweites Sonnenrad
- 28: zweites Hohlrad
- 30: zweiter Planetenträger
- 32: zweites Planetenrad
- 34: Drehachse
- 36: Pfeil
- 38: Pfeil
- 40: Abtriebswelle
- 42: Differentialgetriebe
- 44: Antriebswelle
- 46: Verblockungsschaltelement
- 47: Übersetzungsstufe
- 48: dritter Planetenradsatz
- 50: drittes Sonnenrad
- 52: drittes Hohlrad
- 54: dritter Planetenträger
- 56: drittes Planetenrad
- 58: Erstes Kopplungsschaltelement
- 60: Zweites Kopplungsschaltelement
- 62: Drittes Kopplungsschaltelement
- 64: Viertes Kopplungsschaltelement
- 65: Fünftes Kopplungsschaltelement
- 66: Stirnradstufe
- 68: erstes Zahnrad
- 70: zweites Zahnrad
- 71: Erste Gehäusewand
- 72: erstes Lagerelement
- 73: zweites Lagerelement
- 74: elektrische Maschine
- 75: Stator
- 76: Rotor
- 77: Seitenwelle
- 78: Differentialkorb
- 80: Ausgleichsräder
- 82: Abtriebsräder
- 84: Zweite Gehäusewand
- 86: Drittes Lagerelement
- 88: Viertes Lagerelement
- 90: Fünftes Lagerelement
- 92: Sechstes Lagerelement
- 94: Siebtes Lagerelement
- 96a: Achtes Lagerelement
- 96b: Neuntes Lagerelement
- 96c: Zehntes Lagerelement
- 96d: Elftes Lagerelement
- 96e: Zwölftes Lagerelement
- 96f: Dreizehntes Lagerelement
- 96g: Vierzehntes Lagerelement
- 96h: Fünfzehntes Lagerelement
- 96j: Sechzehntes Lagerelement
- 96k: Siebzehntes Lagerelement
- 97a: Achtzehntes Lagerelement
- 97b: Neunzehntes Lagerelement
- 97c: Zwanzigstes Lagerelement
- 97d: Einundzwanzigstes Lagerelement
- 98: Gesamtaxialspiel
- 100: Axialspiel
- 102: Erste Steckverzahnung
- 104: Pfeil
- 106: Zweite Steckverzahnung

## Patentansprüche

1. Elektrische Antriebsvorrichtung für ein Kraftfahrzeug, mit einem Gehäuse (12), mit einer elektrischen Maschine (74), mit einem Differentialgetriebe (42) und mit einer Getriebevorrichtung (10), welche aufweist:
- einen in dem Gehäuse (12) aufgenommenen ersten Planetenradsatz (14), welcher ein erstes Sonnenrad (16), ein erstes Hohlrad (18) und einen ersten Planetenträger (20) als erste Bauelemente des ersten Planetenradsatzes (14) aufweist; und
- einen in dem Gehäuse (12) aufgenommenen zweiten Planetenradsatz (24), welcher ein drehfest mit dem Gehäuse (12) verbundenes oder verbindbares zweites Sonnenrad (26), ein drehfest mit dem ersten Planetenträger (20) verbundenes oder verbindbares zweites Hohlrad (28) und einen zweiten Planetenträger (30) als zweite Bauelemente des zweiten Planetenradsatzes (24) aufweist, wobei das erste Sonnenrad (16) mit dem zweiten Sonnenrad (26) drehfest verbunden oder verbindbar ist,
wobei dem ersten Planetenradsatz (14) ein Verblockungsschaltelement (46) zugeordnet ist, mittels welchem eines der ersten Bauelemente mit einem anderen der ersten Bauelemente oder mit einem der zweiten Bauelemente drehfest verbindbar ist,
**dadurch gekennzeichnet, dass**
das Differentialgetriebe (42) radial innerhalb des ersten Planetenradsatzes (14) und des zweiten Planetenradsatzes (24) und axial im Wesentlichen im Bereich des ersten Planetenradsatzes (14) und des zweiten Planetenradsatzes (24) angeordnet ist und dass der zweite Planetenträger (30) drehfest mit einem Differentialkorb (78) des Differentialgetriebes (42) verbunden ist,
und dass eine Übersetzungsstufe (47) vorgesehen ist, welche bezüglich eines Momentenflusses zwischen der elektrischen Maschine (74) und dem ersten Planetenradsatz (14) angeordnet ist und welche axial zwischen der elektrischen Maschine (74) und dem Differentialgetriebe (42) und auch axial zwischen der elektrische Maschine (74) und dem ersten Planetenradsatz (14) angeordnet ist, und dass ein Verbindungskörper (13) vorgesehen ist, welcher drehfest mit dem zweiten Sonnenrad (26) verbunden ist und welcher drehfest mit einer ersten Gehäusewand (71) des Gehäuses (12) verbunden oder verbindbar ist, wobei der gesamte Verbindungskörper (13) radial innerhalb des ersten Planetenträgers (20) und des zweiten Planetenträgers (30) angeordnet ist,
wobei der zweite Planetenträger (30) mittels eines Lagerelementes (96h) axial gegenüber dem ersten Planetenträger (20) und mittels eines weiteren Lagerelementes (96j) axial gegenüber dem zweiten Sonnenrad (26) gelagert ist, und wobei mittels eines anderen Lagerelementes (96e) der erste Planetenträger (20) gegenüber dem ersten Sonnenrad (16) axial gelagert ist und mittels eines zusätzlichen Lagerelementes (96d) das erste Sonnenrad (16) axial gegenüber dem Verbindungskörper (13) gelagert ist.

2. Elektrische Antriebsvorrichtung nach Anspruch 1,
**dadurch gekennzeichnet, dass**
eine Antriebswelle (44) vorgesehen ist, über welche Drehmomente in die Getriebevorrichtung (10) einleitbar sind, und dass die Übersetzungsstufe (47) als ein in dem Gehäuse (12) aufgenommener dritter Planetenradsatz (48) ausgebildet ist, welcher ein permanent drehfest mit der Antriebswelle (44) verbundenes drittes Sonnenrad (50), ein permanent drehfest mit dem Gehäuse (12) verbundenes drittes Hohlrad (52) und einen drehfest mit dem ersten Hohlrad (18) verbundenen oder verbindbaren dritten Planetenträger (54) als dritte Bauelemente aufweist.

3. Elektrische Antriebsvorrichtung nach Anspruch 2,
**dadurch gekennzeichnet, dass**
der dritte Planetenträger (54) permanent drehfest mit dem ersten Hohlrad (18) verbunden ist.

4. Elektrische Antriebsvorrichtung nach Anspruch 1,
**dadurch gekennzeichnet, dass**
die Übersetzungsstufe (47) als eine Stirnradstufe (66) ausgebildet ist, welche ein erstes Zahnrad (68) und ein mit dem ersten Zahnrad (68) kämmendes und permanent drehfest mit dem ersten Hohlrad (18) verbundenes zweites Zahnrad (70) aufweist.

5. Elektrische Antriebsvorrichtung nach einem der vorhergehenden Ansprüche,
**dadurch gekennzeichnet, dass**
ein erstes Kopplungsschaltelement (58) vorgesehen ist, mittels welchem das zweite Sonnenrad (26) drehfest mit dem Gehäuse (12) verbindbar ist.

6. Elektrische Antriebsvorrichtung nach einem der vorhergehenden Ansprüche,
**dadurch gekennzeichnet, dass**
eine Parksperre (P) vorgesehen ist, mittels welcher eine Abtriebswelle (40) drehfest an dem Gehäuse (12) festlegbar ist.

7. Elektrische Antriebsvorrichtung nach einem der vorhergehenden Ansprüche,
**dadurch gekennzeichnet, dass**
das zweite Sonnenrad (26) über zwei Lagerelemente (94, 96k)
unmittelbar gegenüber dem Differentialkorb (78) gelagert ist.

8. Elektrische Antriebsvorrichtung nach Anspruch 1,
**dadurch gekennzeichnet, dass**
eine Ausgangswelle der Übersetzungsstufe (47) mittels einer ersten Steckverzahnung (102) drehfest mit einem Außenlamellenträger des Verblockungsschaltelementes (46) verbunden ist.

## Claims

1. Electric drive device for a motor vehicle, with a housing (12), with an electric machine (74), with a differential gearbox (42) and with a gearbox device (10) having:
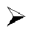 a first planetary gear set (14), which is accommodated in the housing (12) and has a first sun gear (16), a first ring gear (18) and a first planet carrier (20) as first components of the first planetary gear set (14); and
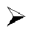 a second planetary gear set (24), which is accommodated in the housing (12) and has a second sun gear (26) non-rotatably connected or connectable to the housing (12), a second ring gear (28) non-rotatably connected or connectable to the first planet carrier (20) and a second planet carrier (30) as second components of the second planetary gear set (24), wherein the first sun gear (16) is non-rotatably connected or connectable to the second sun gear (26),
wherein the first planetary gear set (14) is assigned a blocking shifting element (46), by means of which one of the first components can be non-rotatably connected to another of the first components or to one of the second components,
**characterised in that**
the differential gearbox (42) is located radially within the first planetary gear set (14) and the second planetary gear set (24) and axially substantially in the region of the first planetary gear set (14) and the second planetary gear set (24), and **in that** the second planet carrier (30) is non-rotatably connected to a differential cage (78) of the differential gearbox (42), and **in that** a transmission stage (47) is provided, which is located between the electric machine (74) and the first planetary gear set (14) with regard to a torque flow and which is axially located between the electric machine (74) and the differential gearbox (42) and axially located between the electric machine (74) and the first planetary gear set (14), and **in that** a connecting body (13) is provided, which is non-rotatably connected to the second sun gear (26) and non-rotatably connected or connectable to a first housing wall (71) of the housing (12), wherein the whole connecting body (13) is radially located within the first planet carrier (20) and the second planet carrier (30),
wherein the second planet carrier (30) is axially bearing-mounted by means of a first bearing element (96h) with respect to the first planet carrier (20) and by means of a further bearing element (96) with respect to the second sun gear (26), and wherein the first planet carrier (20) is axially bearing-mounted by means of another bearing element (96e) with respect to the first sun gear (16) and the first sun gear (16) is axially bearing-mounted by means of an additional bearing element (96d) with respect to the connecting body (13).

2. Electric drive device according to claim 1,
**characterised in that**
a drive shaft (44) is provided, by way of which torques can be introduced into the gearbox device (10), and **in that** the transmission stage (47) is designed as a third planetary gear set (48), which is accommodated in the housing (12) and which has a third sun gear (50) permanently and non-rotatably connected to the drive shaft (44), a third ring gear (52) permanently and non-rotatably connected to the housing (12) and a third planet carrier (54) non-rotatably connected or connectable to the first ring gear (18) as third components.

3. Electric drive device according to claim 2,
**characterised in that**
the third planet carrier (54) is permanently and non-rotatably connected to the first ring gear (18).

4. Electric drive device according to claim 1,
**characterised in that**
the transmission stage (47) is designed as a spur gear stage (66) having a first gear (68) and a second gear (70) meshing with the first gear (68) and permanently and non-rotatably connected to the first ring gear (18).

5. Electric drive device according to any of the preceding claims,
**characterised in that**
a first coupling shifting element (58) is provided, by means of which the second sun gear (26) is non-rotatably connectable to the housing (12).

6. Electric drive device according to any of the preceding claims,
**characterised in that**
a parking lock (P) is provided, by means of which a drive shaft (40) can be non-rotatably located at the housing (12).

7. Electric drive device according to any of the preceding claims,
**characterised in that**
the second sun gear (26) is bearing-mounted directly with respect to the differential cage (78) by means of two bearing elements (94, 96k).

8. Electric drive device according to claim 1,
**characterised in that**
an output shaft of the transmission stage (47) is non-rotatably connected to an outer disc support of the blocking shifting element (46) by means of first splines (102).

## Revendications

1. Dispositif d'entraînement électrique pour un véhicule à moteur, comprenant un boîtier (12), un moteur électrique (74), un différentiel (42) et un dispositif de transmission (10), qui comprend :
- un premier ensemble satellite (14) logé dans le boîtier (12), qui présente un premier pignon planétaire (16), une première couronne (18) et un premier porte-satellite (20) en tant que premier élément du premier ensemble satellite (14) ; et
- un second ensemble satellite (24) logé dans le boîtier (12), qui présente un second pignon planétaire (26) relié ou pouvant être relié solidaire en rotation au boîtier (12), une seconde couronne (28) reliée ou pouvant être reliée solidaire en rotation avec le premier porte-satellite (20) et un second porte-satellite (30) en tant que second élément du second ensemble satellite (24), le premier pignon planétaire (16) étant relié ou pouvant être relié solidaire en rotation au second pignon planétaire (26),
- le premier ensemble satellite (14) étant associé à un élément de commutation de blocage (46) au moyen duquel un des premiers éléments pouvant être relié solidaire en rotation avec un autre des premiers éléments ou avec un des seconds éléments
**caractérisé en ce que**
le différentiel (42) est disposé radialement à l'intérieur du premier ensemble satellite (14) et du second ensemble satellite (24) et axialement sensiblement dans la zone du premier ensemble satellite (14) et du second ensemble satellite (24) et **en ce que** le second porte-satellite (30) est relié solidaire en rotation à un carter (78) du différentiel (42),
et **en ce qu'**un étage de multiplication (47) est disposé par rapport à un flux de couple entre le moteur électrique (74) et le premier ensemble satellite (14) et qui est disposé axialement entre le moteur électrique (74) et le différentiel (42) et également axialement entre le moteur électrique (74) et le premier ensemble satellite (14),
et **en ce qu'**un corps de liaison (13) est relié solidaire en rotation au second pignon planétaire (26) et qui est relié ou qui peut être relié solidaire en rotation à une première paroi (71) du logement (12), l'ensemble du corps de liaison (13) étant disposé radialement à l'intérieur du premier porte-satellite (20) et du second porte-satellite (30),
le second porte-satellite (30) étant logé au moyen d'un élément de support (96h) axialement par rapport au premier porte-satellite (20) et au moyen d'un second élément de support (96j) axialement par rapport au second pignon planétaire (26),
et est logé axialement au moyen d'un autre élément de support (96e) du premier porte-satellite (20) par rapport au premier pignon planétaire (16) et le premier pignon planétaire (16) est logé au moyen d'un élément de support supplémentaire (96d) axialement par rapport au corps de liaison (13).

2. Dispositif d'entraînement électrique selon la revendication 1, **caractérisé en ce qu'**un arbre d'entraînement (44) sert à déclencher des couples de rotation dans le dispositif de transmission (10) et **en ce que** l'étage de multiplication (47) est conçu sous la forme d'un troisième ensemble satellite (48) logé dans le boîtier (12), qui comporte un troisième pignon planétaire relié solidaire en rotation en permanence à l'arbre d'entraînement (44), une troisième couronne (52) reliée solidaire en rotation en permanence au boîtier (12) et un troisième porte-satellite (54) en tant que troisième élément, relié ou pouvant être relié solidaire en rotation avec la première couronne (18).

3. Dispositif d'entraînement électrique selon la revendication 2, **caractérisé en ce que** le troisième porte-satellite (54) est relié solidaire en rotation en permanence à la première couronne (18).

4. Dispositif d'entraînement électrique selon la revendication 1, **caractérisé en ce que** l'étage de multiplication (47) est conçu sous la forme d'un étage à pignons droits (66) qui comporte une première roue dentée (68) et une seconde roue dentée (70) s'engrenant avec la première roue dentée (68) et reliée solidaire en rotation en permanence à la première couronne (18).

5. Dispositif d'entraînement électrique selon l'une quelconque des revendications précédentes, **caractérisé en ce qu'**un premier élément de commutation d'embrayage (58) sert à relier solidaire en rotation le second pignon planétaire (26) au boîtier (12).

6. Dispositif d'entraînement électrique selon l'une quelconque des revendications précédentes, **caractérisé en ce qu'**une sécurité de stationnement (P) sert à fixer solidaire en rotation un arbre de sortie (40) sur le boîtier (12).

7. Dispositif d'entraînement électrique selon l'une quelconque des revendications précédentes, **caractérisé en ce que** le second pignon planétaire (26) est monté sur deux éléments de support (94, 96k) directement par rapport au carter de différentiel (78).

8. Dispositif d'entraînement électrique selon la revendication 1, **caractérisé en ce qu'**un arbre de sortie de l'étage de multiplication (47) est relié au moyen d'une cannelure (102) à un support de disque extérieurs de l'élément de commutation de blocage (46).
